(19) Europäisches Patentamt
European Patent Office
Office européen des brevets

(11) Publication number: **0 562 282 A1**

(12) **EUROPEAN PATENT APPLICATION**

(21) Application number: **93102630.6**

(51) Int. Cl.$^5$: **C08G 18/62**, C08G 18/73

(22) Date of filing: **19.02.93**

(30) Priority: **23.03.92 IT MI920671**

(43) Date of publication of application:
**29.09.93 Bulletin 93/39**

(84) Designated Contracting States:
**DE FR SE**

(71) Applicant: **OECE Industrie Chimiche Spa**
**via Volturno 96**
**I-41032 Cavezzo (Modena)(IT)**

(72) Inventor: **Colucci, Mauricio**
**E. Lopez 1450**
**Castelar (1712) Buenos Aires(AR)**

(74) Representative: **Gervasi, Gemma et al**
**NOTARBARTOLO & GERVASI Srl Viale**
**Bianca Maria 33**
**I-20122 Milan (IT)**

(54) **Two-component water-based varnishes containing acrylic-urethane polymers.**

(57) Water-based varnish prepared by mixing, just before use, component A, consisting of an aqueous dispersion of an acrylic polymer containing hydroxy functional groups and an aliphatic polyurethane resin, with component B, consisting of a liquid low-volatility aliphatic polyisocyanate with a free -NCO group content of 18.5% to 20.5% by wt., diluted, if necessary, with a solvent, e.g. ethyl acetate.

EP 0 562 282 A1

## Description of the invention

The present invention relates to water-based varnishes prepared by mixing, just before use, two basic components, i.e. component A, consisting of an acrylic and urethane polymers aqueous dispersion, and component B, consisting of a liquid polyisocyanate compound either as is or in the form of a solution, e.g. in ethyl acetate.

The properties of the films obtained from the varnish as per the invention - which envisages the use of polyisocyanate to cross-link the acrylic-urethane polymeric material, are not those characteristic of thermoplastic non-cross-linked films, but of two-component cross-linked polyurethane systems, which are analogous to those of the known solvent-based systems.

In particular, their resistance to chemicals, to abrasion, etc. is high, while their appearance is as good as that of the traditional solvent-based varnish films.

The varnish as per the present invention - whose basic polymeric component (component A) is in the form of an aqueous dispersion - has the advantage, arising from the absence of solvents, that it does not cause any harm to the users' health and does not create any atmospheric pollution problem.

Polymeric component A in an aqueous dispersion essentially consists of an acrylic polymer containing free hydroxy groups (2% to 4% by wt. OH groups on dry basis) mixed with a lower amount of aliphatic polyurethane resin.

The acrylic resin/polyurethane resin weight ratio ranges between 60/40 and 65/35. The acrylic polymer content ranges from 15% to 18% by wt. of the total aqueous dispersion.

Polymeric dispersion A must act as an emulsifying agent of polyisocyanate (component B).

The polymer particles are 12 to 16 nm in diameter, which is the optimum size for their being uniformly dispersed in the reactive system.

The formulation of polymeric dispersion A envisages the use of some of the usual additives of water-based systems, e.g. antifoam and thickening agents, surfactants, extenders, pigments, etc.

The product viscosity is adjusted by water addition, if any, to 40 to 50 sec. (Ford 4 viscosity at 20 °C).

Component B, which acts as a cross-linking agent, consists of a low-volatility aliphatic polyisocyanate, in particular low molecular weight isocyanate dimers and trimers. The free -NCO groups content must range from 18.5% to 20.5% by wt. Component B is used in the liquid form with a viscosity of 50 to 16,000 mPa.s (at 20 °C); in particular, with a view to obtaining the convenient viscosity it can be diluted with a solvent, e.g. ethyl acetate.

The reactions taking place in the acrylic-urethane-isocyanate polymer system as per the invention may be schematically represented as follows.

During the first reaction step between isocyanate and water (non-selective reaction) a carbamic acid derivative is formed through water addition to the NCO groups: said acid easily liberates $CO_2$, being thus converted into $NH_2$ group; this last readily reacts with an isocyanic group with formation of a urea polymer.

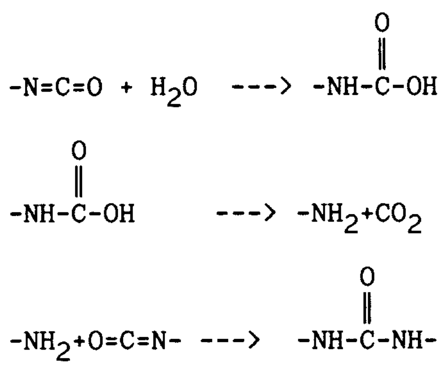

The following scheme represents the reaction between the hydroxy acrylic polymer and isocyanate, with formation of a urethane bond:

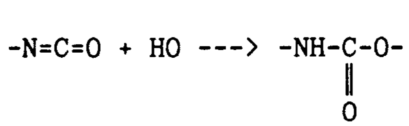

Varnish preparation

The varnish is prepared by mixing under stirring, just before use, component A with the isocyanic cross-linking agent B in convenient amounts to obtain a molar ratio between the free isocyanic groups of component B and the free hydroxy groups of component A of 1 to 1.5.

The physicochemical properties of the varnish obtained are as follows:

| | |
|---|---|
| density at 20 ° C | 1.100 to 1.215 g/cm3 |
| Ford 4 viscosity at 20 ° C | 40 to 50 sec. |
| dry residue (2 hrs at 130 ° C) | 35% to 45% by wt. |
| gelling time (time of use) at 20 ° C | 60 to 150 min. |

A typical formulation of a varnish according to the invention is reported hereinbelow (% by wt.).

| COMPONENT A | % ON THE WHOLE | CONTENT OF DRY PRODUCT % |
|---|---|---|
| Acrylic resin dispersion with hydroxy groups | 51.435 | 30-32 |
| Aliphatic polyurethane resin dispersion | 28.350 | 33-35 |
| Polyethylene wax emulsion | 8.000 | 50-55 |
| Silica | 3.125 | 100 |
| Water | 6.874 | |
| Preservatives | 0.001 | 15-20 |
| Silicone-based antifoam agent | 1.215 | 100 |
| Silicone | 1.000 | 100 |
| | 100.000% | |

| COMPONENT B | |
|---|---|
| Low-volatility aliphatic polyisocyanate | 50.000% by wt. |
| Ethyl acetate | 50.000% by wt. |
| | 100.000% by wt. |

| Weight ratios between the components | |
|---|---|
| COMPONENT A | 100 |
| COMPONENT B | 10 |

Performance of the varnish according to the invention

The performance tests carried out on the varnish in actual use gave the results reported in the following table (according to BS 6250/3 standard for severe-duty horizontal surfaces - excepting kitchen worktops). Application time: 1 hr.

| Humid heat (°C) | Min. values requested | Results |
|---|---|---|
| BS 3962/2 | | |
| 55 | ≥4 | 5 |
| 70 | ≥3 | 5 |
| 85 | ≥2 | 5 |
| Dry heat (°C) | | |
| BS 3962/3 | | |
| 85 | ≥4 | 5 |
| 100 | ≥3 | 5 |

Resistance to staining

BS 3962/4

| | Min. values requested | Results |
|---|---|---|
| Acetone | ≥3 | 4 |
| Ethyl/butyl acetate | ≥3 | 4 |
| Tea | =5 | 5 |
| Coffee | =5 | 5 |
| Ethyl alcohol (96%) | ≥3 | 4 |
| Ethyl alcohol (48%) | ≥4 | 5 |
| Resistance to oil and grease | | |
| BS 3962/5 | =5 | 5 |

The results obtained from the performance tests prove that the film loses its thermoplastic properties and becomes a themosetting material.

VARNISH FILM CROSS-LINKING

Film formation of the two-component water-based acrylic-urethane polymeric system does not occur by coalescence as in the case of the usual aqueous dispersions. Instead, after water evaporation, a 100 to 200 hrs cross-linking reaction takes place to form urethane and urea groups; after that, the physicochemical resistance of the varnish film obtained reaches the highest value.

Application properties

On the basis of wide experimentation carried out in the commercial plants producing usual solvent varnishes, the application properties of the water-based varnish containing acrylic-urethane polymers were found to be good.

The coating film adhesiveness, performance and appearance were found to be excellent.

Adhesion

According to the tests, adhesion to the following items was excellent:

- wood of various types
- wood particle boards
- polyester substrates
- polyurethane substrates
- polyacrylic substrates
- polyepoxydic substrates
- metallic substrate (iron)
- substrate coated with a different water-based varnish

Excellent and identical adhesion values (crosshatch test, standard 150-4624) were shown by tests on the various supports. The MIR (Multiple Internal Reflectance) analysis of the product applied to wood board showed the formation of urea and urethane groups between 1600 and 1640 $cm^{-1}$, which are the same groups observed in the MIR plot of solvent polyurethane. This is a proof that a reaction occurred between the NCO groups of the cross-linking agent and the OH groups of the acrylic resin aqueous dispersion.

## Claims

**1.** Water-based varnish prepared by mixing, just before use, the following basic components:
component A: an acrylic-urethane polymer aqueous dispersion, consisting of an acrylic polymer containing hydroxy functional groups (2% to 4% by wt. OH groups on dry basis) mixed with an aliphatic polyurethane resin, the acrylic resin/polyurethane resin weight ratio ranging between 60/40 to 65/35;
component B: low-volatility aliphatic polyisocyanate in the liquid form, containing 18.5% to 20.5% by wt. free -NCO groups, diluted, if necessary, with a solvent, e. g. ethyl acetate; said component B being mixed with component A in convenient amounts to obtain a molar ratio between -NCO groups and -OH groups ranging from 1 to 1.5.

**2.** Water-based varnish according to claim 1 wherein component A has an acrylic polymer content of 15% to 18% by wt. of the total.

**3.** Water-based varnish according to claim 1 wherein polyisocyanate in a 50% by wt. solution with ethyl acetate is used.

**4.** Water-based varnish according to claim 1 wherein the viscosity of component A is adjusted to 40-50 sec. (Ford 4 viscosity at 20 °C).

European Patent Office

# EUROPEAN SEARCH REPORT

Application Number

EP 93 10 2630

DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 358 979 (BAYER)<br>* page 2, line 37 - page 5, line 55; claims 1-6 *<br>--- | 1 | C08G18/62<br>C08G18/73 |
| A | DE-A-3 724 743 (WESTDEUTSCHE FARBENGESELLSCHAFT BRUECHE & CO)<br>----- | | |
| | | | TECHNICAL FIELDS SEARCHED (Int. Cl.5 ) |
| | | | C08G<br>C09D |

The present search report has been drawn up for all claims

| Place of search | Date of completion of the search | Examiner |
|---|---|---|
| THE HAGUE | 03 JUNE 1993 | BOURGONJE A.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)